# EUROPEAN PATENT APPLICATION

(11) **EP 2 703 752 A1**
(43) Date of publication of application: **05.03.2014**
(21) Application number: 12006183.3
(22) Date of filing: 31.08.2012
(51) Int. Cl.: F25B 45/00

(54) **Method of servicing an aircraft cooling system and aircraft cooling system**

(71) Applicant: Airbus Operations GmbH, 21129 Hamburg (DE)
(72) Inventor: Piesker, Markus, 21129 Hamburg (DE)
(74) Representative: Schicker, Silvia

(57) **Abstract**

A method of servicing an aircraft cooling system (10) comprises connecting a refilling container (60) containing a two-phase refrigerant to a refrigerant connection (50a, 50b) provided in a cooling circuit (12) of the cooling system (10), supplying refrigerant from the refilling container (60) into the cooling circuit (12) of the cooling system (10), and operating a condenser (22a, 22b, 22c) disposed in the cooling circuit (12) so as to liquefy gaseous refrigerant flowing through the cooling circuit (12).

## Description

The invention relates to a method of servicing an aircraft cooling system for operation with a two-phase refrigerant, an aircraft cooling system for operation with a two-phase refrigerant and an arrangement comprising the aircraft cooling system as well as a servicing unit for servicing the aircraft cooling system.

Cooling systems for operation with a two-phase refrigerant are known from DE 10 2006 005 035 B3, WO 2007/088012 A1, DE 10 2009 011 797 A1 and US 2010/0251737 A1 and may be used to cool various cooling energy consumers present on board an aircraft such as, for example, food that is intended to be supplied to the passengers or heat generating components such as electric or electronic components. In the cooling systems known from DE 10 2006 005 035 B3, WO 2007/088012 A1, DE 10 2009 011 797 A1 and US 2010/0251737 A1 the phase transitions of the refrigerant flowing through the circuit that occur during operation of the system allow the latent heat consumption that then occurs to be utilized for cooling purposes. The refrigerant mass flow needed to provide a desired cooling capacity is therefore markedly lower than for example in a liquid cooling system, in which a one-phase liquid refrigerant is used.

Consequently, the cooling systems described in DE 10 2006 005 035 B3, WO 2007/088012 A1, DE 10 2009 011 797 A1 and US 2010/0251737 A1 may have lower tubing cross sections than a liquid cooling system with a comparable cooling capacity and hence provide the advantages of a lower installation volume and a lower weight. What is more, the reduction of the refrigerant mass flow makes it possible to reduce the conveying capacity needed to convey the refrigerant through the cooling circuit of the cooling system. This leads to an increased efficiency of the system because less energy is needed to operate a corresponding conveying device, such as for example a pump, and moreover less additional heat generated by the conveying device during operation of the conveying device has to be removed from the cooling system.

The invention is directed to the object to provide a reliable and efficient method of servicing an aircraft cooling system for operation with a two-phase refrigerant. Further, the invention is directed to the object to provide an aircraft cooling system for operation with a two-phase refrigerant which can be serviced in a reliable and efficient manner. Finally, the invention is directed to the object to provide an arrangement comprising the aircraft cooling system and a servicing unit for servicing the aircraft cooling system in a reliable and efficient manner.

These objects are achieved by a method having the features of claim 1, an aircraft cooling system having the features of claim 8 and an arrangement having the features of claim 14.

In a method of servicing an aircraft cooling system, a refilling container containing a two-phase refrigerant is connected to a refrigerant connection provided in a cooling circuit of the cooling system. Preferably, the refilling container is connected to the refrigerant connection of the cooling system in a sealed manner via a preferably flexible line and a first refrigerant connection adaptor. The refilling container, the flexible line and the first refrigerant connection adaptor may be integrated into a preferably mobile servicing unit which may be formed separate of the aircraft and be adapted for connection to the aircraft cooling system exclusively for servicing purposes. The aircraft cooling system may, for example, be a cooling system which is in particular suitable for cooling heat generating components or food on board the aircraft and comprises a cooling circuit allowing circulation of a two-phase refrigerant therethrough.

The two-phase refrigerant which circulates in the cooling circuit of the cooling system is a refrigerant, which upon releasing cooling energy to a cooling energy consumer is converted from the liquid to the gaseous state of aggregation and is then converted back to the liquid state of aggregation. The two-phase refrigerant may, for example, be R134A (CH₂F-CF₃). Electric or electronic systems, such as avionic systems or fuel cell systems usually have to be cooled at a higher temperature level than food. For cooling these systems, for example Galden^{®} can be used as a two-phase refrigerant. Preferably, however, CO₂ is employed as the two-phase refrigerant, since CO₂ is at least substantially environment-neutral.

Basically, the cooling system is operated with a predetermined operating amount of refrigerant circulating in the cooling circuit which is defined by an amount of refrigerant which is necessarily required to properly operate the cooling system, and an additional amount of refrigerant to compensate for leakages of the system and system tolerances. In order to limit an amount of refrigerant exiting the cooling system in the event of a leakage of the system, the predetermined operating amount of refrigerant circulating in the cooling circuit should be as low as possible. Small leakages present in the system or service work involving dismounting of components from the cooling system or replacing components of the cooling system may, however, cause the amount of refrigerant circulating in the cooling circuit to fall below a predetermined minimum value which may, for example, be defined by the amount of refrigerant which is necessarily required to properly operate the cooling system.

The servicing method according to the invention therefore comprises the step of supplying the refrigerant contained in the refilling container from the refilling container into the cooling circuit of the cooling system. In particular, the refrigerant contained in the refilling container is supplied into the cooling circuit of the cooling system while there is still a considerable amount of refrigerant present in the cooling circuit of the cooling system which might, however, not be sufficient to properly operate the cooling system.

During supplying the refrigerant contained in the refilling container from the refilling container into the cooling circuit of the cooling system, in the method according to the invention, a condenser disposed in the cooling circuit is operated so as to liquefy gaseous refrigerant flowing through the cooling circuit. Operation of the condenser causes a decrease of the temperature and hence the pressure of the refrigerant in the cooling circuit of the cooling system. As a result, refrigerant may be conveyed from the refilling container into the cooling circuit of the cooling system in a fast and efficient manner. Further, operation of the condenser ensures that refrigerant supplied from the refilling container into the cooling circuit of the cooling system is liquefied immediately upon entering the cooling circuit. Hence, the period of time which is necessary to reestablish a ready-to-operate state of the cooling system after servicing is minimized. The method according to the invention thus allows a cooling system operated with a two-phase refrigerant to be serviced in a reliable, time-saving and cost-effective manner.

Preferably, operation of the condenser is controlled such that the pressure of the refrigerant in the cooling circuit of the cooling system is decreased below the pressure of the refrigerant in the refilling container. Hence, the refrigerant may be conveyed from the refilling container into the cooling circuit of the cooling system driven by the pressure difference between the refilling container and the cooling circuit, i.e. the difference between the pressure of the refrigerant in the refilling container and the pressure of the refrigerant in the cooling circuit. The use of an additional conveying device for conveying the refrigerant from the refilling container into the cooling circuit thus can be limited or even dispensed with.

In the method of servicing an aircraft cooling system a flow of refrigerant from the refilling container into the cooling circuit is allowed, whereas, however, a reflow of refrigerant from the cooling circuit into the refilling container preferably is prevented. The reflow of refrigerant from the cooling circuit into the refilling container may be prevented, independent of the pressure conditions in the refilling container and the cooling circuit, for example, by means of a check valve which may be integrated into the refrigerant connection of the cooling circuit or the first refrigerant connection adaptor of the servicing unit.

The pressure difference driven supply of refrigerant from the filling container into the cooling circuit of the cooling system may slow down or even be interrupted due to a decrease of the temperature and hence the pressure of the refrigerant in the refilling container which may result from a large amount of refrigerant being discharged from the refilling container in a short period of time. The refrigerant contained in the refilling container then may be liquefied, for example by means of a condenser of the servicing unit, prior to being supplied into the cooling circuit of the cooling system. The liquid refrigerant may be conveyed into the cooling circuit of the cooling system by means of a suitable conveying device, such as a pump of the servicing unit. Further, it is conceivable to also supercool the refrigerant contained in the refilling container prior to being supplied into the cooling circuit of the cooling system. Liquefying and optional supercooling of the refrigerant allows continuing with the supply of refrigerant from the filling container into the cooling circuit of the cooling system independent of the pressure conditions in the refilling container and the cooling circuit.

Finally, also a pressure difference driven supply of liquid refrigerant from the refilling container into the cooling circuit of the cooling system is conceivable. In this case, liquid refrigerant contained in a lower region of the refilling container is supplied into the cooling circuit, wherein the pressure in the refilling container is built up due to the presence of a gas layer in an upper region of the refilling container. In case the cooling circuit of the cooling system is refilled merely by a pressure difference driven supply of liquid refrigerant from the refilling container into cooling circuit, a servicing unit to be connected to the cooling system for servicing the cooling system may be or a particularly simply design and may comprise only one refilling container.

In a preferred embodiment of the method of servicing an aircraft cooling system operation of the condenser is ceased when an amount of refrigerant in the cooling circuit has reached a predetermined maximum value. When operation of the condenser is ceased, residual refrigerant is supplied from the refilling container into the cooling circuit only until pressure equalization takes place between the refilling container and the cooling circuit, i.e. until the pressure of the refrigerant in the refilling container corresponds to the pressure of the refrigerant in the cooling circuit. As a result, overfilling of the cooling circuit with refrigerant is avoided.

Ceasing operation of the condenser may be achieved by shutting-down the condenser, for example under the control of a suitable control unit. Alternatively or additionally thereto, it is, however, also conceivable to design a storage volume of the condenser such that it is capable of receiving an amount of liquefied refrigerant which corresponds to the predetermined maximum amount of refrigerant in the cooling circuit. When the storage volume of the condenser is filled, i.e. the amount of liquefied refrigerant received in the storage volume of the condenser corresponds to the predetermined maximum amount of refrigerant in the cooling circuit, the condenser is flooded and hence liquefaction operation of the condenser is ceased.

The predetermined maximum value of the amount of refrigerant in the cooling circuit may correspond to the predetermined operating amount of refrigerant or be slightly higher than the predetermined operating amount of refrigerant, but still low enough to prevent an undesired pressure increase in the cooling circuit, for example at high ambient temperatures. The amount of liquid refrigerant in the cooling circuit may be detected by at least one fill level sensor which may be disposed in an accumulator and/or a storage container of the cooling system. Further, by measuring the temperature and the pressure of the refrigerant in the cooling circuit, the amount of gaseous refrigerant in the cooling circuit may be derived allowing the total amount of refrigerant present in the cooling circuit of the cooling system to be determined.

The supply of residual refrigerant from the refilling container into the cooling circuit until pressure equalization takes place between the refilling container and the cooling circuit, however, still may cause an undesired pressure increase in the cooling circuit, for example when the refrigerant in the refilling container has a high temperature due to high ambient temperatures. Therefore, the supply of refrigerant from the refilling container into the cooling circuit may be interrupted when a pressure in the cooling circuit has reached a predetermined value. An interruption of the supply of refrigerant from the refilling container into the cooling circuit in dependence of the pressure in the cooling circuit may be achieved, for example, by means of a pressure regulator which may be incorporated in the refrigerant connection of the cooling system or the first refrigerant connection adaptor of the servicing unit.

In the method of servicing an aircraft cooling system a first warning signal indicating a required supply of refrigerant into the cooling circuit may be output when an amount of refrigerant in the cooling circuit falls below a predetermined warning value. The predetermined warning value may be lower than the predetermined maximum value and the predetermined operating value of the amount of refrigerant in the cooling circuit, but still higher than the predetermined minimum value of the amount of refrigerant in the cooling circuit. The first warning signal may be a visual signal or an audible signal which may indicate to the aircraft crew and/or the aircraft service crew that servicing of the cooling system including refilling of refrigerant into the cooling circuit of the cooling system will be required in the near future, but that the cooling system still is ready to operate.

Alternatively or additionally thereto, a second warning signal indicating a required supply of refrigerant into the cooling circuit may be output when an amount of refrigerant in the cooling circuit falls below the predetermined minimum value. The second warning signal may be a visual signal or an audible signal which may indicate to the aircraft crew and/or the aircraft service crew that servicing of the cooling system including refilling of refrigerant into the cooling circuit of the cooling system is required and that the cooling system is no longer ready to operate.

Further, operation of the cooling system may be ceased, for example under the control of a suitable control unit, when an amount of refrigerant in the cooling circuit falls below the predetermined minimum value. Similarly, start-up of the cooling system may be prevented, for example under the control of a suitable control unit, when the amount of refrigerant in the cooling circuit is below the predetermined minimum value. Ceasing operation and/or preventing start-up of the cooling system when the amount of refrigerant in the cooling circuit is below the predetermined minimum value protects the components of the cooling system, in particular a conveying device for conveying the refrigerant through the cooling circuit of the cooling system, from damages caused by dry operation of these components.

Upon dismounting a component disposed in the cooling circuit from the cooling circuit, self-sealing couplings connecting the component to the cooling circuit may prevent refrigerant from exiting the cooling circuit. For example, a chiller and/or the conveying device for conveying the refrigerant through the cooling circuit of the cooling system may be connected to the cooling circuit via self-sealing couplings and thus may be dismounted from the cooling circuit, for example for servicing purposes, in a particularly safe, easy and time-saving manner without an excessive amount of refrigerant leaking from the cooling circuit. Self-sealing couplings, however, add to the costs and the weight of the cooling system and also may not be actuatable at high refrigerant pressures in the cooling circuit of the cooling system.

In the method of servicing an aircraft cooling system, prior to dismounting a component disposed in the cooling circuit of the cooling system from the cooling circuit, for example for servicing purposes, refrigerant may be discharged from the cooling circuit or conveyed into a hermetically sealable accumulator disposed in the cooling circuit. When the refrigerant present in the cooling circuit of the cooling system is discharged from the cooling circuit or conveyed into a hermetically sealable accumulator, uncontrolled leaking of the refrigerant from the cooling circuit upon dismounting the component from the cooling circuit is prevented, even if the component is not connected to the cooling circuit via self-sealing couplings or in case the self-sealing couplings are not actuatable due to high refrigerant pressures in the cooling circuit of the cooling system. In case the refrigerant is collected in a hermetically sealable accumulator, the refrigerant is maintained in the cooling circuit of the cooling system such that it is not necessary to refill the cooling circuit of the cooling system after the servicing work. Specific servicing tasks, for example maintenance of the hermetically sealable accumulator, or safety regulations, however, may require that the refrigerant in fact is discharged from the cooling circuit.

Refrigerant discharged from the cooling circuit may either be released to the ambient or collected in a storage container. For discharging refrigerant from the cooling circuit of the cooling system, a second refrigerant connection adaptor may be connected to the refrigerant connection of the cooling system. The second refrigerant connection adaptor may comprise a nozzle which is adapted to control the flow of refrigerant from the cooling circuit such that freezing of the refrigerant and hence icing of the nozzle and/or further components of the cooling system and/or the servicing unit is reliably prevented. Preferably, the refrigerant is discharged from the cooling circuit of the cooling system in its liquid state of aggregation.

The storage container may be incorporated in a servicing unit in a releasable manner and be connected to the refrigerant connection of the cooling system via the second refrigerant connection adaptor and a preferably flexible line. Preferably, the refrigerant discharged from the cooling circuit of the cooling system is stored in the storage container in its liquid state of aggregation and hence at a relatively low pressure. If necessary, the refrigerant may be liquefied by means of a condenser of the servicing unit prior to being received in the storage container.

After discharging refrigerant from the cooling circuit and prior to reintroducing refrigerant into the cooling circuit, the cooling circuit preferably is evacuated. The cooling circuit may be evacuated by means of an evacuation device such as, for example, a vacuum pump of the servicing unit. Evacuation of the cooling circuit allows residual air and humidity, which may affect operation of the cooling system, to be removed from the cooling system before refrigerant is reintroduced into the cooling circuit. The refrigerant reintroduced into the cooling circuit may be the refrigerant which is discharged from the cooling circuit and received in the storage container. It is, however, also conceivable to supply the cooling system entirely or partially with "fresh" refrigerant which may be supplied to the storage container of the servicing unit.

Upon reintroducing refrigerant into the evacuated cooling circuit, the condenser of the cooling system may be operated so as to evaporate the refrigerant prior to entering the cooling circuit and to liquefy the gaseous refrigerant upon circulating through the cooling circuit. A condenser of the servicing unit preferably is not operated so as to ensure unhindered evaporation of the refrigerant which, for example, is contained in the storage container of the servicing unit. Preferably, the storage container is heated so as to support evaporation of the refrigerant in the storage container. As an alternative, it is, however, also conceivable to convey the refrigerant from the storage container into the cooling circuit of the cooling system in its liquid state of aggregation, for example by means of a conveying device of the servicing unit. Finally, also a pressure difference driven supply of liquid refrigerant from the storage container into the cooling circuit of the cooling system is conceivable. In this case, liquid refrigerant contained in a lower region of the storage container is supplied into the cooling circuit, wherein the pressure in the storage container is built up due to the presence of a gas layer in an upper region of the storage container.

An aircraft cooling system according to the invention comprises a cooling circuit allowing circulation of a two-phase refrigerant therethrough. A refrigerant connection is provided in the cooling circuit which, for servicing of the aircraft cooling system, is adapted to be connected to a refilling container containing the two-phase refrigerant. The cooling system further comprises a control unit, for example an electronic control unit, which is adapted to operate a condenser disposed in the cooling circuit so as to liquefy gaseous refrigerant flowing through the cooling circuit during the supply of refrigerant from the refilling container into the cooling circuit.

The refrigerant connection of the cooling system may be designed so as to allow a flow of refrigerant from the refilling container into the cooling circuit, but to prevent a flow of refrigerant from the cooling circuit into the refilling container. For example, a check valve may be integrated into the refrigerant connection.

The control unit may further be adapted to cease operation of the condenser when an amount of refrigerant in the cooling circuit has reached a predetermined maximum value. Alternatively or additionally thereto, a storage volume of the condenser may be designed such that it is capable of receiving an amount of liquefied refrigerant which corresponds to the predetermined maximum amount of refrigerant in the cooling circuit. When the storage volume of the condenser is filled, i.e. the amount of liquefied refrigerant received in the storage volume of the condenser corresponds to the predetermined maximum amount of refrigerant in the cooling circuit, the condenser is flooded and hence liquefaction operation of the condenser is ceased.

The control unit may further be adapted to interrupt the supply of refrigerant from the refilling container into the cooling circuit of the cooling system when an amount of refrigerant in the cooling circuit has reached a predetermined maximum value. For example, the control unit may be adapted to control a suitable valve of the cooling system into a closed position wherein the valve interrupts the flow of refrigerant from the refilling container into the cooling circuit of the cooling system. Alternatively or additionally thereto, the control unit of the cooling system and/or a control unit of a servicing unit may be adapted to control a suitable valve of the servicing unti into a closed position wherein the valve interrupts the flow of refrigerant from the refilling container into the cooling circuit of the cooling system. Finally, the control unit of the cooling system and/or the control unit of a servicing unit may be adapted to cease operation of the servicing unit to interrupt the supply of refrigerant from the refilling container into the cooling circuit of the cooling system.

The aircraft cooling system may further comprise means for interrupting the supply of refrigerant from the refilling container into the cooling circuit of the cooling system when a pressure in the cooling circuit has reached a predetermined value. An interruption of the supply of refrigerant from the refilling container into the cooling circuit in dependence of the pressure in the cooling circuit may be achieved, for example, by means of a pressure regulator incorporated in the refrigerant connection of the cooling system.

The aircraft cooling system may further comprise a warning signal output device which is adapted to output a first warning signal indicating a required supply of refrigerant into the cooling circuit-when an amount of refrigerant in the cooling circuit falls below a predetermined warning value, and/or to output a second warning signal indicating a required supply of refrigerant into the cooling circuit when an amount of refrigerant in the cooling circuit falls below a predetermined minimum value.

Further, the control unit may be adapted to cease operation of the cooling system when an amount of refrigerant in the cooling circuit falls below the predetermined minimum value. Similarly, the control unit may be adapted to prevent start-up of the cooling system when the amount of refrigerant in the cooling circuit is below the predetermined minimum value.

A component disposed in the cooling circuit, such as, for example, a chiller or a conveying device, may be connected to the cooling circuit via self-sealing couplings which, upon dismounting the component from the cooling circuit, are adapted to prevent refrigerant from exiting the cooling circuit.

Further, the aircraft cooling system may comprise a hermetically sealable accumulator disposed in the cooling circuit.

The control unit of the aircraft cooling system, upon reintroducing refrigerant into the cooling circuit when the cooling circuit, after discharging refrigerant from the cooling circuit, is evacuated, may be adapted to operate the condenser of the cooling system so as to evaporate the refrigerant prior to entering the cooling circuit and to liquefy the gaseous refrigerant upon circulating through the cooling circuit.

An arrangement according to the invention comprises an above described aircraft cooling system and a servicing unit for servicing the aircraft cooling system. The servicing unit comprises a first refrigerant connection adaptor adapted to be connected to the refrigerant connection of the cooling system so as to connect a refilling container containing a two-phase refrigerant to a cooling circuit of the cooling system.

The servicing unit preferably is formed separate from the aircraft and may be designed as a movable device which, for example, comprises a carriage onto which the components of servicing unit are mounted. The servicing unit preferably further comprises a condenser. The condenser may be used for liquefying refrigerant contained in a refilling container prior to being supplied into the cooling circuit of the cooling system, for liquefying refrigerant discharged from the cooling circuit of the cooling system prior to being received in a storage container and/or for liquefying refrigerant prior to being reintroduced into the cooling circuit when the cooling circuit, after discharging refrigerant from the cooling circuit, is evacuated.

The servicing unit may further comprise a conveying device which may be used for conveying refrigerant from the refilling container into the cooling circuit of the cooling system and/or for conveying refrigerant from the cooling circuit of the cooling system into the storage container. Preferably, the conveying device of the servicing unit is designed in the form of a pump and hence should be operated with refrigerant in its liquid state of aggregation.

The servicing unit may further comprise means for interrupting the supply of refrigerant from the refilling container into the cooling circuit of the cooling system, when a pressure in the cooling circuit has reached a predetermined value. For example, a suitable pressure regulator may be incorporated in the first refrigerant connection adaptor of the servicing unit. Further, the servicing unit may comprise means for interrupting the supply of refrigerant from the refilling container into the cooling circuit of the cooling system, when an amount of refrigerant in the cooling circuit has reached a predetermined value.

A second refrigerant connection adaptor of the servicing unit may be adapted to be connected to the refrigerant connection of the cooling system so as to discharge refrigerant from the cooling circuit of the cooling system. The second refrigerant connection adaptor may comprise a nozzle which is adapted to control the flow of refrigerant from the cooling circuit such that freezing of the refrigerant and hence icing of the nozzle and/or further components of the cooling system and/or the servicing unit is reliably prevented.

The servicing unit may further comprise an evacuation device such as, for example, a vacuum pump which may be adapted to evacuate the cooling circuit of the cooling system after discharging refrigerant from the cooling circuit and prior to reintroducing refrigerant into the cooling circuit.

The servicing unit may also comprise a heater which is adapted to heat the storage container of the servicing unit so as to support evaporation of the refrigerant in the storage container.

A preferred embodiment of the invention now is described in more detail with reference to the enclosed schematic drawing which depicts an arrangement comprising an aircraft cooling system suitable for operation with a two-phase refrigerant and a servicing unit for servicing the aircraft cooling system.

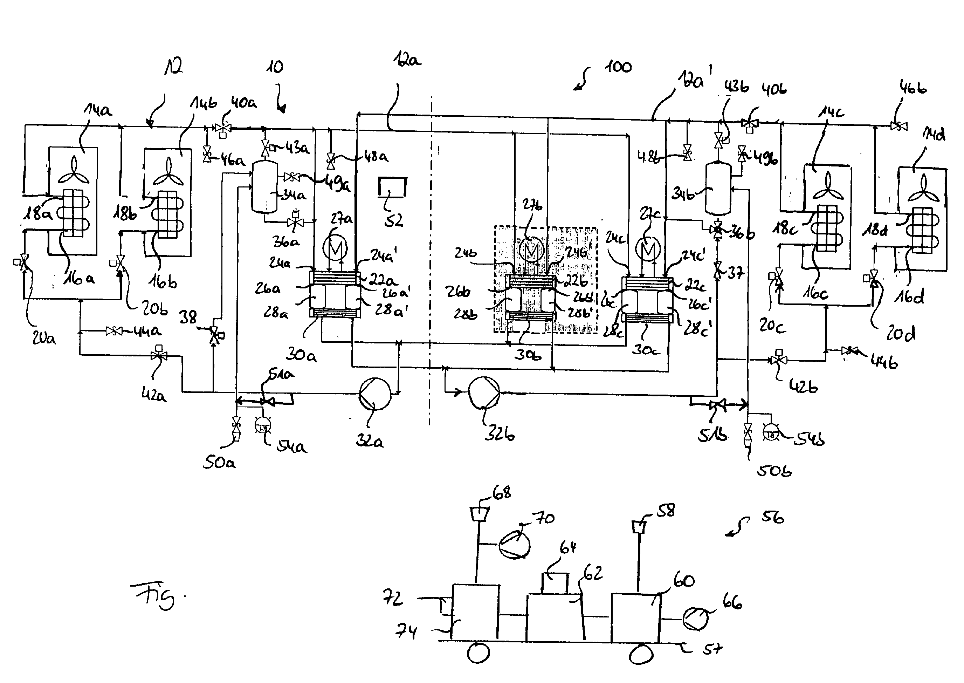

The arrangement 100 depicted in Figure 1 comprises a cooling system 10 which on board an aircraft, for example, may be employed to cool food provided for supplying to the passengers. The cooling system 10 comprises a cooling circuit 12 allowing circulation of a two-phase refrigerant therethrough. The two-phase refrigerant may for example be CO₂ or R134A. Four evaporators 14a, 14b, 14c, 14d are disposed in the cooling circuit 12. Each evaporator 14a, 14b, 14c, 14d comprises a refrigerant inlet 16a, 16b, 16c, 16d and a refrigerant outlet 18a, 18b, 18c, 18d. The refrigerant flowing through the cooling circuit 12 is supplied to the refrigerant inlets 16a, 16b, 16c, 16d of the evaporators 14a, 14b, 14c, 14d in its liquid state of aggregation. Upon flowing through the evaporators 14a, 14b, 14c, 14d the refrigerant releases its cooling energy to a cooling energy consumer which in the embodiment of a cooling system 10 depicted in Figure 1 is formed by the food to be cooled. Upon releasing its cooling energy, the refrigerant is evaporated and hence exits the evaporators 14a, 14b, 14c, 14d at the refrigerant outlets 18a, 18b, 18c, 18d of the evaporators 14a, 14b, 14c, 14d in its gaseous state of aggregation. The supply of refrigerant to the evaporators 14a, 14b, 14c, 14d is controlled by respective valves 20a, 20b, 20c, 20d which are disposed in the cooling circuit 12 upstream of the evaporators 14a, 14b, 14c, 14d, respectively.

Further, the cooling system 10 comprises a first, a second and a third condenser 22a, 22b, 22c. Each condenser 22a, 22b, 22c has two refrigerant inlets 24a, 24a', 24b, 24b', 24c, 24c' and two refrigerant outlets 26a, 26a', 26b, 26b', 26c, 26c'. The refrigerant which is evaporated in the evaporators 14a, 14b, 14c, 14d, via a portion of the cooling circuit 12 downstream of the evaporators 14a, 14b, 14c, 14d and upstream of the condensers 22a, 22b, 22c, is supplied to the refrigerant inlets 24a, 24a', 24b, 24b' of the condensers 22a, 22b, 22c in its gaseous state of aggregation. The condensers 22a, 22b, 22c are thermally coupled to respective chillers 27a, 27b, 27c which are connected to the cooling circuit 12 of the cooling system 10 via self-sealing couplings. Alternatively, the condensers 22a, 22b, 22c, however, also may be coupled to a different cold source such as, for example, an outer skin heat exchanger of the aircraft. The cooling energy provided by the chillers 27a, 27b, 27c in the condensers 22a, 22b, 22c is used to condense the refrigerant. Thus, the refrigerant exits the condensers 22a, 22b, 22c at the refrigerant outlets 26a, 26a', 26b, 26b', 26c, 26c' of the condensers 22a, 22b, 22c in its liquid state of aggregation.

The refrigerant outlets 26a, 26a', 26b, 26b', 26c, 26c' of the condensers 22a, 22b, 22c each are connected to a storage container 28a, 28a', 28b, 28b', 28c, 28c', 28d, 28d' which is arranged downstream and below each one of the condensers 22a, 22b, 22c. The storage containers 28a, 28a', 28b, 28b', 28c, 28c', 28d, 28d', which may also be formed integral with the condensers 22a, 22b, 22c, are connected to supercoolers 30a, 30b, 30c which are arranged downstream and below the storage containers 28a, 28a', 28b, 28b', 28c, 28c', 28d, 28d'. Liquid refrigerant may be conveyed gravity-driven from the condensers 22a, 22b, 22c into the storage containers 28a, 28a', 28b, 28b', 28c, 28c', 28d, 28d' and further into the supercoolers 30a, 30b, 30c. The supercoolers 30a, 30b, 30c may also be formed integral with the condensers 22a, 22b, 22c.

The cooling circuit 12 of the cooling system 10 comprises two loops 12a, 12a' which are hermetically sealed from each other. Two evaporators 14a, 14b are disposed in the first cooling circuit loop 12a, and two evaporators 14c, 14d are disposed in the second cooling circuit loop 12a'. A first conveying device 32a designed in the form of a pump serves to convey refrigerant through the first cooling circuit loop 12a and a second conveying device 32b also designed in the form of a pump serves to convey refrigerant through the second cooling circuit loop 12a'. The conveying devices 32a, 32b are connected to the cooling circuit 12 of the cooling system 10 via self-sealing couplings. Each one of the condensers 22a, 22b, 22c is connected to first and the second conveying device 32a, 32b and hence to the first and the second cooling circuit loop 12a, 12a' so as to provide for redundancy in the event of a malfunctioning of one of the condensers 22a, 22b, 22c.

In the first cooling circuit loop 12a a first accumulator 34a is connected to the refrigerant inlet 24a of the condenser 22a, wherein the supply of refrigerant from the first accumulator 34a to the condenser 22a is controlled by means of a valve 36a. In the second cooling circuit loop 12a' a valve 36b controls the supply of refrigerant from a second accumulator 34b to the refrigerant inlet 24c' of the condenser 22c. While the valve 36a provided in the first cooling circuit loop 12a merely serves to control the flow of refrigerant between the first accumulator 34a and the condenser 22a, the valve 36b disposed in the second cooling circuit loop 12a' is designed in the form of a 3/2 control valve which may either allow refrigerant to be conveyed into the second accumulator 34a or the condenser 22c by the second conveying device 32b or allow refrigerant to flow from the second accumulator 34a to the refrigerant inlet 24c' of the condenser 22c. A pressure regulating valve 37 is disposed upstream of the valve 36b and downstream of the second conveying device 32b. The pressure regulating valve 37 is adapted to open or close in dependence on a pressure difference acting on the valve 37. In the first cooling circuit loop 12a the supply of refrigerant from the first conveying device 32a to the first accumulator 34a is controlled by means of a valve 38.

In an alternative embodiment of the cooling system 10 the accumulators 34a, 34b may simply be designed as an "additional volume" which at a predetermined temperature limits the pressure in the cooling circuit 12. The accumulators 34a, 34b then may be connected to only a single line which opens into the accumulators 34a, 34b in a lower region, preferably at the lowest point of the accumulators 34a, 34b and connectes the accumulators 34a, 34b to the condensers 22a, 22b, 22c.

Cooling circuit control valves 40a, 40b are disposed in the first and the second cooling circuit loop 12a, 12a' downstream of the evaporators 14a, 14b, 14c, 14d and upstream of the condensers 22a, 22b, 22c. Further cooling circuit control valves 42a, 42b are disposed in the first and the second cooling circuit loop 12a, 12a' upstream of the evaporators 14a, 14b, 14c, 14d and downstream of the condensers 22a, 22b, 22c. In their closed state, the cooling circuit control valves 40a, 40b, 42a, 42b seal a high pressure section of the cooling circuit loops 12a, 12a' from a low pressure section of the cooling circuit loops 12a, 12a'. Finally, cooling circuit control valves 43a, 43b are disposed in the first and the second cooling circuit loop 12a, 12a' upstream of the accumulators 34a, 34b. By closing or suitably controlling the valves 36a, 36b, 38, 43a, 43b the accumulators 34a, 34b may be hermetically sealed.

The accumulators 34a, 34b are connected to the cooling circuit 12 via self-sealing couplings. For dismounting the accumulators 34a, 34b from the cooling circuit 12, the valves 36a, 36b, 38, 43a, 43b may be closed and the accumulators 34a, 34b may be released from the cooling circuit 12 without considerable amounts of refrigerant exiting the cooling system 10 by simply actuating the self-sealing couplings. The accumulators 34a, 34b may be released from the cooling circuit 12 in an empty state or also with refrigerant received therein. If desired, an accumulator 34a, 34b which is filled with the refrigerant present in the cooling circuit 12 of the cooling system 10 may be replaced by a replacement accumulator 34a, 34b which is filled with a desired amount of "fresh" refrigerant. By replacing the accumulators 34a, 34b, refilling of the cooling circuit 12 with refrigerant may be omitted. For replacing the accumulators 34a, 34b, it may be advantageous to relieve the pressure in the cooling circuit 12, if necessary, to a pressure corresponding to the ambient pressure. For relieving the pressure in the cooling circuit 12, refrigerant may be discharged from the cooling circuit 12 by means of the servicing unit 56 as discussed in detail below. In case the refrigerant is environment-neutral, it is, however, also conceivable to release the refrigerant from the cooling circuit 12 to the ambient.

In the embodiment of a cooling system 10 shown in the drawing, the valves 36a, 36b, 38, 43a, 43b are automatically actuatable valves. It is, however, also conceivable to design the valves 36a, 36b, 38, 43a, 43b as manually actuatable valves. An actuating lever for actuating manually actuatable valves 36a, 36b, 38, 43a, 43b then, however, should be designed in such a manner that unintended misuse of the lever is prevented. For example, the actuating lever of a valve 36a, 36b, 38, 43a, 43b could be designed such that the lever, for actuating the valve 36a, 36b, 38, 43a, 43b, has be pressed into the valve 36a, 36b, 38, 43a, 43b and, after the actuation of the valve 36a, 36b, 38, 43a, 43b, automatically falls out of the valve 36a, 36b, 38, 43a, 43b or latches in an idle position.

The cooling system 10 further comprises pressure relief valves 44a, 44b which are connected to a respective one of the cooling circuit loops 12a, 12a' downstream of a respective one of the cooling circuit control valves 42a, 42b. Pressure relief valves 46a, 46b are connected to a respective one of the cooling circuit loops 12a, 12a' upstream of a respective one of the cooling circuit control valves 40a, 40b. Pressure relief valves 48a, 48b are connected to a respective one of the cooling circuit loops 12a, 12a' downstream of a respective one of the cooling circuit control valves 40a, 40b. Finally, pressure relief valves 49a, 49b are connected to the accumulators 34a, 34b. The pressure relief valves 44a, 44b, 46a, 46b, 48a, 48b, 49a, 49b are designed as mechanically actuatable valves which automatically open in case a pressure difference acting on the valves 44a, 44b, 46a, 46b, 48a, 48b, 49a, 49b exceeds a threshold value which is determined by the design of the valves 44a, 44b, 46a, 46b, 48a, 48b, 49a, 49b. It is, however, also conceivable to design the pressure relief valves 44a, 44b, 46a, 46b, 48a, 48b, 49a, 49b in the form of burst discs or bust discs may be provided in addition to the pressure relief valves 44a, 44b, 46a, 46b, 48a, 48b, 49a, 49b.

The cooling system 10 further is provided with refrigerant connections 50a, 50b. The refrigerant connection 50a associated with the first cooling circuit loop 12a is connected to the first accumulator 34a, whereas the refrigerant connection 50a associated with the second cooling circuit loop 12a is connected to the second accumulator 34b. Further, the refrigerant connection 50a associated with the first cooling circuit loop 12a is connected to an outlet side of the first conveying device 32a, wherein a valve 51a serves to control the supply of refrigerant from the outlet side of the first conveying device 32a to the refrigerant connection 50a. Similarly, the refrigerant connection 50b associated with the second cooling circuit loop 12b is connected to an outlet side of the second conveying device 32b, wherein a valve 51b serves to control the supply of refrigerant from the outlet side of the second conveying device 32b to the refrigerant connection 50b. Each one of the refrigerant connections 50a, 50b comprises an integrated check valve and an integrated pressure regulator (not shown in the drawing). Operation of the cooling system 10 is controlled by means of an electronic control unit 52. In particular, the electronic control unit 52 controls operation of the evaporators 14a, 14b, 14c, 14d, the condensers 22a, 22b and the various valves employed in the cooling circuit 12.

Fill level sensors (not shown in the drawing) are provided in the accumulators 34a, 34b and/or the storage containers 28a, 28a', 28b, 28b', 28c, 28c'. The fill level sensors serve to detect the amount of liquid refrigerant present in the cooling circuit 12. Further, the cooling system 10 comprises sensors (also not shown in the drawing) which serve to detect the temperature and the pressure of the refrigerant in the cooling circuit 12 and hence allow the amount of gaseous refrigerant present in the cooling circuit 12 to be determined. Finally, suitable sensors (also not shown in the drawing) are provided which detect the operating state of the valves 36a, 36b, 38, 43a, 43b, i.e. detect whether the accumulators 34a, 34b are hermetically sealed or connected to the cooling circuit 12. The signals of all sensors are transmitted to the control unit 52. Finally, a warning signal output device 54a, 54b is associated with each one of the first and the second cooling circuit loop 12a, 12a'.

The arrangement 100 further comprises a servicing unit 56 for servicing the aircraft cooling system 10. The servicing unit 56 is designed as a movable device which comprises a carriage 57 onto which the components of servicing unit 100 are mounted. The servicing unit 56 comprises a first refrigerant connection adaptor 58 adapted to be connected to a refrigerant connection 50a, 50b of the cooling system 10 so as to connect a refilling container 60 containing a two-phase refrigerant to the cooling circuit 12 of the cooling system 10. The servicing unit 56 further comprises a condenser 62 which is provided with cooling energy from a chiller 64 and a conveying device 66 which is designed in the form of a pump.

A second refrigerant connection adaptor 68 of the servicing unit 56 is adapted to be connected to a refrigerant connection 50a, 50b of the cooling system 10 so as to discharge refrigerant from the cooling circuit 12 of the cooling system 10. The second refrigerant connection adaptor 68 comprises a nozzle (not shown in the drawing) which is adapted to control the flow of refrigerant from the cooling circuit 12 such that freezing of the refrigerant and hence icing of the nozzle and/or further components of the cooling system 10 and/or the servicing unit 56 is prevented. Alternatively or additionally to the check valve and the pressure regulator integrated in the refrigerant connections 50a, 50b of the cooling system 10, also the first and/or the second refrigerant connection adaptor 58, 68 of the servicing unit 56 may comprise an integrated check valve and an integrated pressure regulator (not shown in the drawing).

The refrigerant connections 50a, 50b of the cooling system 10 are adapted to be connected to either the first or the second refrigerant connection adaptor 58, 68 of the servicing unit 56. When the refrigerant connections 50a, 50b of the cooling system 10 are connected to the first refrigerant connection adaptor 58 of the servicing unit 56 for introducing refrigerant into the cooling circuit 12, a mechanical or electrical mechanism of the refrigerant connections 50a, 50b (not shown in the drawing), which is actuated upon connecting the first refrigerant connection adaptor 58 to the refrigerant connections 50a, 50b, provides for an activation of the check valve and the pressure regulator integrated in the refrigerant connections 50a, 50b. Hence, refrigerant is prevented to flow from the cooling circuit 12 in the direction of the servicing unit. In addition, built-up of excessive pressure in the cooling circuit 12 is prevented.

When, however, the refrigerant connections 50a, 50b of the cooling system 10 are connected to the second refrigerant connection adaptor 68 of the servicing unit 56 for discharging refrigerant from the cooling circuit 12, the mechanical or electrical mechanism of the refrigerant connections 50a, 50b, which is actuated upon connecting the second refrigerant connection adaptor 68 to the refrigerant connections 50a, 50b, provides for a deactivation of the check valve and the pressure regulator integrated in the refrigerant connections 50a, 50b. Hence, a flow of refrigerant from the cooling circuit 12 in the direction of the servicing unit is enabled. An undesired flow of refrigerant from the servicing unit 56 into the cooling circuit 12 and/or the built-up of excessive pressure in the servicing unit 56 are prevented when the second refrigerant connection adaptor 68 comprises an integrated check valve and/or an integrated pressure regulator.

The servicing unit 56 further comprises an evacuation device 70 in the form of a vacuum pump. Finally, the servicing unit 56 comprises a heater 72 which is adapted to heat a storage container 74 of the servicing unit 56.

In the following, operation of the cooling system 10 will be described. Upon system start-up, the control unit 52 controls the operation of the cooling system 10 such that the chillers 27a, 27b, 27c are operated and refrigerant is liquefied in the condensers 22a, 22b, 22c and supercooled in the supercoolers 30a, 30b, 30c. Due to the conveying devices 32a, 32b being arranged below the condensers 22a, 22b, 22c the conveying devices 32a, 32b are flooded by the refrigerant liquefied in the condensers 22a, 22b, 22c. Since the conveying devices 32a, 32b are flooded before operation of the conveying devices 32a, 32b is started, it is not necessary that the conveying devices 32a, 32b are designed in the form of a self-sucking pump.

When the level of the liquid refrigerant in the conveying devices 32a, 32b has reached a level which ensures that dry operation of the conveying devices 32a, 32b is avoided, operation of the conveying devices 32a, 32b is started. The conveying devices 32a, 32b convey refrigerant liquefied in the condensers 22a, 22b, 22c into the accumulators 34a, 34b via valves 36a, 36b. The valves 42a, 42b are closed so as to prevent refrigerant to be conveyed to the evaporators 14a, 14b, 14c, 14d. This operation is continued until the amount of liquid refrigerant present in the cooling circuit 12 and stored in the accumulators 34a, 34b is sufficient to allow that cooling system components which are disposed downstream of the conveying devices 32a, 32b, i.e. the tubing of the cooling circuit 12 and the evaporators 14a, 14b, 14c, 14d can be flooded with liquid refrigerant.

An operating state of the cooling system 10 wherein the condensers 22a, 22b, 22c are operated so as liquefy refrigerant, although the amount of liquid refrigerant present in the cooling circuit 12 is already sufficient to allow the desired flooding of cooling system components, while the supply of refrigerant to the evaporators 14a, 14b, 14c, 14d, however, still is interrupted is designated as a stand-by operational state of the cooling system 10. The control device 52 of the cooling system 10 controls the operation of the cooling system 10 in such a way that the cooling system 10 is operated in its stand-by operational state as long as possible.

The stand-by operational state of the cooling system 10 is terminated and normal operation of the cooling system 10 is initiated when cooling energy has to be supplied to cooling energy consumers. To initiate normal operation of the cooling system 10, the valves 42a, 42b are opened such that liquid refrigerant may be conveyed to the evaporators 14a, 14b, 14c, 14d by the conveying devices 32a, 32b. Further, the supply of refrigerant to the evaporators 14a, 14b, 14c, 14d is controlled by opening the valves 20a, 20b, 20c, 20d. When the valves 20a, 20b, 20c, 20d are open, the valves 36a, 36b interrupt the supply of refrigerant to the accumulators 34a, 34b such that the refrigerant exiting the condensers 22a, 22b, 22c is exclusively conveyed to the evaporators 14a, 14b, 14c, 14d.

During further normal operation of the cooling system 10, the valves 42a, 42b may, however, again be partially closed or entirely closed so as to control the pressure of the refrigerant within the cooling circuit 12 in dependence on the operating state of the evaporators 14a, 14b, 14c, 14d, i.e. in dependence on the cooling energy demand of the cooling energy consumers supplied with cooling energy by the cooling system 10. Further, the pressure of the refrigerant within the cooling circuit 12 and the supply of refrigerant to the evaporators 14a, 14b, 14c, 14d is controlled by appropriately controlling the speed of the conveying devices 32a, 32b. Specifically, the operating speed of the conveying devices 32a, 32b is increased when the cooling requirement of the cooling energy consumers supplied with cooling energy by the evaporators 14a, 14b, 14c, 14d increases.

During normal operation of the cooling system 10, i.e. when refrigerant is evaporated in the evaporators 14a, 14b, 14c, 14d so as to supply cooling energy to respective cooling energy consumers, the control unit 52 controls the valves 40a, 40b such that the pressure in the cooling circuit 12 downstream of the evaporators 14a, 14b, 14c, 14d and upstream of the condensers 22a, 22b, 22c is higher than downstream of the condensers 22a, 22b, 22c and upstream of the evaporators 14a, 14b, 14c, 14d. Specifically, the valves 40a, 40b are operated so as to increase or decrease a flow cross-section of the cooling circuit 12 between the evaporators 14a, 14b, 14c, 14d and the condensers 22a, 22b, 22c.

The control device 52 during normal operation of the cooling system 10 controls the supply of refrigerant to the evaporators 14a, 14b, 14c, 14d in dependence on the operational state of the evaporators 14a, 14b, 14c, 14d, i.e. the cooling energy requirement of the cooling energy consumers coupled to the evaporators 14a, 14b, 14c, 14d such that a dry evaporation of the refrigerant occurs in the evaporators 14a, 14b, 14c, 14d. The supply of refrigerant to the individual evaporators 14a, 14b, 14c, 14d is controlled by suitably controlling the respective valves 20a, 20b, 20c, 20d.

In the following, servicing of the cooling system 10 using the servicing unit 56 will be described. Basically, the cooling system 10 is operated with a predetermined operating amount of refrigerant circulating in the cooling circuit 12 which is defined by an amount of refrigerant which is necessarily required to properly operate the cooling system 10, and an additional amount of refrigerant to compensate for leakages of the system 10 and system tolerances. Small leakages present in the system 10 or service work involving dismounting of components from the cooling system 10 or replacing components of the cooling system 10 may, however, cause the amount of refrigerant circulating in the cooling circuit 12 to fall below a predetermined minimum value which may, for example, be defined by the amount of refrigerant which is necessarily required to properly operate the cooling system 10.

The warning signal output units 54a, 54b of the cooling system 10 output a first warning signal indicating a required supply of refrigerant into the cooling circuit 12 when an amount of refrigerant in the cooling circuit 12, which is measured by means of the fill level sensors, the pressure sensors and the temperature sensors of the cooling system 10, falls below a predetermined warning value. The predetermined warning value is lower than the predetermined operating value of the amount of refrigerant in the cooling circuit 12, but still higher than the predetermined minimum value of the amount of refrigerant in the cooling circuit 12. The first warning signal may be a visual signal or an audible signal which indicates to an aircraft crew or a service crew that servicing of the cooling system 10 including refilling of refrigerant into the cooling circuit 12 of the cooling system 10 will be required in the near future, but that the cooling system 10 still is ready to operate.

Further, the warning signal output units 54a, 54b of the cooling system 10 output a second warning signal indicating a required supply of refrigerant into the cooling circuit 12 when an amount of refrigerant in the cooling circuit 12, which is measured by means of the fill level sensors, the pressure sensors and the temperature sensors of the cooling system 10, falls below the predetermined minimum value. The second warning signal may be a visual signal or an audible signal which indicates to an aircraft crew or a service crew that servicing of the cooling system 10 including refilling of refrigerant into the cooling circuit 12 of the cooling system 10 is required and that the cooling system 10 is no longer ready to operate.

In addition, the control unit 52 ceases operation of the cooling system 10 when an amount of refrigerant in the cooling circuit, which is measured by means of the fill level sensors, the pressure sensors and the temperature sensors of the cooling system 10, falls below the predetermined minimum value. Similarly, start-up of the cooling system 10 is prevented by the control unit 52 when the amount of refrigerant in the cooling circuit 12 is below the predetermined minimum value. Ceasing operation and/or preventing start-up of the cooling system 10 when the amount of refrigerant in the cooling circuit 10 is below the predetermined minimum value protects the components of the cooling system 10, in particular the conveying devices 32a, 32b from damages caused by dry operation.

To refill the cooling circuit 12 of the cooling system 10 with refrigerant, the residual refrigerant present in the cooling circuit 12 may be conveyed into the accumulators 34a, 34b. Thereafter, the accumulators 34a, 34b may be sealed by closing the valves 36a, 36b, 38, 43a, 43b. Finally the accumulators 34a, 34b may be dismounted from the cooling circuit and replaced by replacement accumulators 34a, 34b filled with a desired amount of "fresh" refrigerant, wherein the self-sealing couplings via which the accumulators 34a, 34b are connected to the cooling circuit 12 prevent refrigerant from leaking from the cooling circuit 12 upon dismounting the accumulators 34a, 34b. Instead of the relatively expensive and heavy self-sealing couplings, simple couplings may be used for connecting the accumulators 34a, 34b to the cooling circuit 12. In this case, for replacing the accumulators 34a, 34b, it might be necessary to relieve the pressure in the cooling circuit 12. For relieving the pressure in the cooling circuit 12, refrigerant may be discharged from the cooling circuit 12 by means of the servicing unit 56 as discussed in detail below. In case the refrigerant is environment-neutral, it is, however, also conceivable to release the refrigerant from the cooling circuit 12 to the ambient.

Alternatively or additionally thereto, the refilling container 60 of the servicing unit 56, which contains a two-phase refrigerant of the same type as the refrigerant circulating in the cooling circuit 12 of the cooling system 10, is connected to a refrigerant connection 50a, 50b of the cooling system 10 in a sealed manner via the first refrigerant connection adaptor 58 and a flexible line. Thereafter, the refrigerant contained in the refilling container 60 is supplied from the refilling container 60 into the cooling circuit 12 of the cooling system 10 while at least one of the condensers 22a, 22b, 22c disposed in the cooling circuit 12 of the cooling system 10, under the control of the control unit 52, is operated so as to liquefy gaseous refrigerant flowing through the cooling circuit 12. To avoid an overfilling of the cooling circuit 12 due to the valves 36a, 36b, 38, 43a, 43b being unintentionally closed and sealing the accumulators 34a, 34b from the cooling circuit 12, the at least one of the condensers 22a, 22b, 22c is operated only in case the sensors for detecting the operating state of the valves 36a, 36b, 38, 43a, 43b detect that the accumulators 34a, 34b are connected to the cooling circuit 12 and hence can receive refrigerant supplied into the cooling circuit 12 from the refilling container 60.

Operation of the condenser 22a, 22b, 22c causes a decrease of the temperature and hence the pressure of the refrigerant in the cooling circuit 12 of the cooling system 10. As a result, refrigerant may be conveyed from the refilling container 60 into the cooling circuit 12 of the cooling system 10 in a fast and efficient manner. Further, operation of the condenser 22a, 22b, 22c ensures that refrigerant supplied from the refilling container 60 into the cooling circuit 12 of the cooling system 10 is liquefied immediately upon entering the cooling circuit 12. Hence, the period of time which is necessary to bring the cooling system 10 into a state ready to operate after servicing is minimized.

In particular, operation of the at least one of the condensers 22a, 22b, 22c, by means of the control unit 52, is controlled such that the pressure of the refrigerant in the cooling circuit 12 of the cooling system 10 is decreased below the pressure of the refrigerant in the refilling container 60. Hence, the refrigerant may be conveyed from the refilling container 60 into the cooling circuit 12 of the cooling system 10 driven by the pressure difference between the refilling container 60 and the cooling circuit 12, i.e. the difference between the pressure of the refrigerant in the refilling container 60 and the pressure of the refrigerant in the cooling circuit 12.

The check valve integrated into the refrigerant connection 50a, 50b which is connected to the first refrigerant connection adaptor 58 of the servicing unit 52 ensures that refrigerant may flow of from the refilling container 60 into the cooling circuit 12, but that a reflow of refrigerant from the cooling circuit 12 into the refilling container 60 is prevented.

In case the pressure difference driven supply of refrigerant from the filling container 60 into the cooling circuit 12 of the cooling system 10 slows down or is even interrupted due to a decrease of the temperature and hence the pressure of the refrigerant in the refilling container 60, the refrigerant contained in the refilling container 60 is liquefied by means of the condenser 62 of the servicing unit 52 and thereafter conveyed into the cooling circuit 12 of the cooling system 10 by means of the conveying device 66 of the servicing unit 52 in its liquid state of aggregation.

Under the control of the control unit 52, operation of the at least one of the condensers 22a, 22b, 22c of the cooling system 10 is ceased when an amount of refrigerant in the cooling circuit 12, which is measured by means of the fill level sensors, the pressure sensors and the temperature sensors of the cooling system 10, has reached a predetermined maximum value. The predetermined maximum value of the amount of refrigerant in the cooling circuit 12 corresponds to the predetermined operating amount of refrigerant in the cooling circuit 12. When operation of the condenser 22a, 22b, 22c is ceased, residual refrigerant is supplied from the refilling container 60 into the cooling circuit 12 only until pressure equalization takes place between the refilling container 60 and the cooling circuit 12, i.e. until the pressure of the refrigerant in the refilling container 60 corresponds to the pressure of the refrigerant in the cooling circuit. As a result, overfilling of the cooling circuit 12 with refrigerant is avoided.

To avoid that the supply of residual refrigerant from the refilling container 60 into the cooling circuit 12 until pressure equalization takes place between the refilling container 60 and the cooling circuit 12 causes an undesired pressure increase in the cooling circuit 12, for example when the refrigerant in the refilling container 60 has a high temperature due to high ambient temperatures, the supply of refrigerant from the refilling container 60 into the cooling circuit 12 is interrupted when a pressure in the cooling circuit 12, which is measured by means of the pressure sensors of the cooling system 10 has reached a predetermined value. The interruption of the supply of refrigerant from the refilling container 60 into the cooling circuit 12 in dependence of the pressure in the cooling circuit 12 is achieved by means of a pressure regulator incorporated in the refrigerant connection 50a, 50b of the cooling system 10.

In case one of the chillers 27a, 27b, 27c or one of the conveying devices 32a, 32b has to be dismounted from the cooling circuit 12, for example for servicing purposes, the self-sealing couplings connecting these components to the cooling circuit 12 prevent refrigerant from exiting the cooling circuit 12. If, however, a component of the cooling system 10, which is not connected to the cooling circuit 12 via self-sealing couplings, should be dismounted from the cooling system 10, refrigerant is discharged from the cooling circuit 12 or conveyed into one or both of the hermetically sealable accumulators 34a, 34b. Refrigerant received in the accumulators 34a, 34b does not have to be replaced, but simply is maintained in the cooling circuit 12 of the cooling system 10.

If, for example for safety reasons or for ease of the dismounting procedure, it is decided to discharge the refrigerant present in the cooling circuit 12 of the cooling system 10 from the cooling circuit 12, the refrigerant may either be released to the ambient or collected in the storage container 74 of the servicing unit 52. For discharging refrigerant from the cooling circuit 12 of the cooling system 10 the second refrigerant connection adaptor 68 is connected to a refrigerant connection 50a, 50b of the cooling system 10. The nozzle of the second refrigerant connection adaptor 68 controls the flow of refrigerant from the cooling circuit 12 such that freezing of the refrigerant and hence icing of the nozzle and/or further components of the cooling system 10 and/or the servicing unit 52 is prevented.

In particular, the refrigerant is discharged from the cooling circuit 12 of the cooling system 10 in its liquid state of aggregation. For example, the refrigerant, after being liquefied, may be conveyed from the strorage containers 28a, 28a', 28b, 28b', 28c, 28c', 28d, 28d' to the refrigerant connections 50a, 50b of the cooling system 10 by means of the conveying devices 32a, 32b. To prevent a flow of refrigerant from the strorage containers 28a, 28a', 28b, 28b', 28c, 28c', 28d, 28d' to the accumulators 34a, 34b, and to enable a flow of refrigerant from the strorage containers 28a, 28a', 28b, 28b', 28c, 28c', 28d, 28d' to the refrigerant connections 50a, 50b, respective valves 37, 38, 42a, 42b, 51a, 51b are suitably controlled, i.e. valves 37, 38, 42a, 42b, are closed, whereas valves 51a, 51b are opened.

The refrigerant discharged from the cooling circuit 12 of the cooling system 10 is stored in the storage container 74 of the servicing unit 52 in it liquid state of aggregation and hence at a relatively low pressure. If necessary, the refrigerant may be liquefied by means of a condenser 64 of the servicing unit 52 prior to being received in the storage container 74. Discharging the refrigerant from the cooling circuit 12 of the cooling system 10 in its liquid state of aggregation allows to compensate for pressure differences between the cooling circuit 12, in particular the accumulators 34a, 34b and the storage container 74 of the servicing unit 52. In addition, the refrigerant experiences only a small temperature decrease.

After discharging refrigerant from the cooling circuit 12 and prior to reintroducing refrigerant into the cooling circuit 12 so as to return the cooling system to a ready to operate state, the cooling circuit 12 is evacuated by means of the evacuation device 70 of the servicing unit 60. Evacuation of the cooling circuit 12 allows residual air and humidity, which may affect operation of the cooling system 10, to be removed from the cooling system 10 before refrigerant is reintroduced into the cooling circuit 12. The refrigerant reintroduced into the cooling circuit 12 may be the refrigerant which is discharged from the cooling circuit 12 and received in the storage container 74. It is, however, also conceivable to supply the cooling system 10 entirely or partially with "fresh" refrigerant which may be supplied to the storage container 74 of the servicing unit.

Upon reintroducing refrigerant into the evacuated cooling circuit 12, at least one of the condensers 22a, 22b, 22c of the cooling system 10 is operated under the control of the control unit 52 so as to evaporate the refrigerant prior to entering the cooling circuit 12 and to liquefy the gaseous refrigerant upon circulating through the cooling circuit 12. The condenser 62 of the servicing unit 52 is not operated so as to ensure unhindered evaporation of the refrigerant contained in the storage container 74 of the servicing unit 52. If necessary, the storage container 74 is heated by means of the heating device 72 so as to support evaporation of the refrigerant in the storage container 74. As an alternative, it is, however, also possible to convey the refrigerant from the storage container 74 into the cooling circuit 12 of the cooling system 10 in its liquid state of aggregation by means of a conveying device 66 of the servicing unit 52.

## Claims

1. Method of servicing an aircraft cooling system (10), the method comprising:
- connecting a refilling container (60) containing a two-phase refrigerant to a refrigerant connection (50a, 50b) provided in a cooling circuit (12) of the cooling system (10),
- supplying refrigerant from the refilling container (60) into the cooling circuit (12) of the cooling system (10), and
- operating a condenser (22a, 22b, 22c) disposed in the cooling circuit (12) so as to liquefy gaseous refrigerant flowing through the cooling circuit (12).

2. Method according to claim 1,
wherein a reflow of refrigerant from the cooling circuit (12) into the refilling container (60) is prevented, and/or wherein the refrigerant contained in the refilling container (60) is liquefied prior to being supplied into the cooling circuit (12) of the cooling system (10).

3. Method according to claim 1 or 2,
wherein operation of the condenser (22a, 22b, 22c) is ceased when an amount of refrigerant in the cooling circuit (12) has reached a predetermined maximum value and/or wherein the supply of refrigerant from the refilling container (60) into the cooling circuit (12) of the cooling system (10) is interrupted when a pressure in the cooling circuit (12) has reached a predetermined value.

4. Method according to any one of claims 1 to 3,
wherein a first warning signal indicating a required supply of refrigerant into the cooling circuit (12) is output when an amount of refrigerant in the cooling circuit (12) falls below a predetermined warning value, and/or wherein a second warning signal indicating a required supply of refrigerant into the cooling circuit (12) is output when an amount of refrigerant in the cooling circuit (12) falls below a predetermined minimum value, and/or wherein operation of the cooling system (10) is ceased when an amount of refrigerant in the cooling circuit (12) falls below the predetermined minimum value.

5. Method according to any one of claims 1 to 4,
wherein, upon dismounting a component disposed in the cooling circuit (12) from the cooling circuit (12), self-sealing couplings connecting the component to the cooling circuit (12) prevent refrigerant from exiting the cooling circuit (12).

6. Method according to any one of claims 1 to 5,
wherein, prior to dismounting a component disposed in the cooling circuit (12) from the cooling circuit (12), refrigerant is either discharged from the cooling circuit (12) or conveyed into a hermetically sealable accumulator (34a, 34b) disposed in the cooling circuit (12), wherein refrigerant discharged from the cooling circuit (12) is either released to the ambient or collected in a storage container (74).

7. Method according to any one of claims 1 to 6,
wherein after discharging refrigerant from the cooling circuit (12) and prior to reintroducing refrigerant into the cooling circuit (12), the cooling circuit (12) is evacuated, and/or wherein, for reintroducing refrigerant into an evacuated cooling circuit (12), the condenser (22a, 22b, 22c) of the cooling system (10) is operated so as to evaporate the refrigerant prior to entering the cooling circuit (12) and to liquefy the gaseous refrigerant upon circulating through the cooling circuit (12), wherein the storage container (74) containing the refrigerant preferably is heated so as to support evaporation of the refrigerant in the storage container (74).

8. Aircraft cooling system (10) comprising:
- a cooling circuit (12) allowing circulation of a two-phase refrigerant therethrough,
- a refrigerant connection (50a, 50b) provided in the cooling circuit (12) which, for servicing of the aircraft cooling system (10), is connectable to a refilling container (60) containing the two-phase refrigerant, and
- a control unit (52) which is adapted to operate a condenser (22a, 22b, 22c) disposed in the cooling circuit (12) so as to liquefy gaseous refrigerant flowing through the cooling circuit (12) during the supply of refrigerant from the refilling container (60) into the cooling circuit (12).

9. Aircraft cooling system according to claim 8,
wherein the refrigerant connection (50a, 50b) is designed so as to allow a flow of refrigerant from the refilling container (60) into the cooling circuit (12), but to prevent a flow of refrigerant from the cooling circuit (12) into the refilling container (60).

10. Aircraft cooling system according to claim 8 or 9,
wherein the control unit (52) is adapted to cease operation of the condenser (22a, 22b, 22c) when an amount of refrigerant in the cooling circuit (12) has reached a predetermined maximum value and/or wherein the aircraft cooling system (10) comprises means for interrupting the supply of refrigerant from the refilling container (60) into the cooling circuit (12) of the cooling system (10) when a pressure in the cooling circuit (12) has reached a predetermined value.

11. Aircraft cooling system according to any one of claims 8 to 10,
further comprising a warning signal output device (54a, 54b) which is adapted to output a first warning signal indicating a required supply of refrigerant into the cooling circuit (12) when an amount of refrigerant in the cooling circuit (12) falls below a predetermined warning value, and/or to output a second warning signal indicating a required supply of refrigerant into the cooling circuit (12) when an amount of refrigerant in the cooling circuit (12) falls below a predetermined minimum value, and/or wherein the control unit (52) is adapted to cease operation of the cooling system (10) when an amount of refrigerant in the cooling circuit (12) falls below the predetermined minimum value.

12. Aircraft cooling system according to any one of claims 8 to 11,
wherein a component disposed in the cooling circuit (12) is connected to the cooling circuit (12) via self-sealing couplings which, upon dismounting the component from the cooling circuit (12), are adapted to prevent refrigerant from exiting the cooling circuit (12) and/or wherein the aircraft cooling system (10) further comprises a hermetically sealable accumulator (34a, 34b) disposed in the cooling circuit (12).

13. Aircraft cooling system according to any one of claims 8 to 12,
wherein the control unit (52), upon reintroducing refrigerant into the cooling circuit (12) when the cooling circuit (12), after discharging refrigerant from the cooling circuit (12), is evacuated, is adapted to operate the condenser (22a, 22b, 22c) of the cooling system (10) so as to evaporate the refrigerant prior to entering the cooling circuit (12) and to liquefy the gaseous refrigerant upon circulating through the cooling circuit (12).

14. Arrangement (100) comprising:
- an aircraft cooling system (10) according to any one of claims 8 to 13, and
- a servicing unit (52) for servicing the aircraft cooling system (10), the servicing unit (52) comprising a first refrigerant connection adaptor (58) adapted to be connected to the refrigerant connection (50a, 50b) of the cooling system (10) so as to connect a refilling container (60) containing a two-phase refrigerant to a cooling circuit (12) of the cooling system (10).

15. Arrangement according to claim 14,
wherein the servicing unit (52) further comprises:
- a condenser (64), and/or
- a conveying device (66), and/or
- means for interrupting the supply of refrigerant from the refilling container (60) into the cooling circuit (12) of the cooling system (10) when a pressure in the cooling circuit (12) has reached a predetermined value, and/or
- a second refrigerant connection adaptor (68) adapted to be connected to the refrigerant connection (50a, 50b) of the cooling system (10), and/or
- an evacuation device (70) for evacuating the cooling circuit (12) of the cooling system (10) after discharging refrigerant from the cooling circuit (12) and prior to reintroducing refrigerant into the cooling circuit (12), and/or
- a storage container (74), and/or
- a heater (72) which is adapted to heat the storage container (74).
